(19)

Europäisches
Patentamt
European
Patent Office
Office européen
des brevets

(11) **EP 1 746 300 A1**

(12) **EUROPEAN PATENT APPLICATION**
published in accordance with Art. 158(3) EPC

(43) Date of publication:
**24.01.2007 Bulletin 2007/04**

(51) Int Cl.:
*F16D 25/08* (2006.01)    *F16D 13/70* (2006.01)

(21) Application number: **04730732.7**

(22) Date of filing: **30.04.2004**

(86) International application number:
**PCT/JP2004/006355**

(87) International publication number:
**WO 2005/106274 (10.11.2005 Gazette 2005/45)**

(84) Designated Contracting States:
**DE FR**

(71) Applicant: **HITACHI, LTD.**
**Chiyoda-ku**
**Tokyo 100-8280 (JP)**

(72) Inventors:
• **Yamasaki, Masaru,**
**c/o Hitachi Ltd, Int. Prop. Gp.**
**Chiyoda-ku, Tokyo 100-8220 (JP)**
• **Konno, Hitoshi,**
**c/o Hitachi, Ltd., Int. Prop. Gp.**
**Chiyoda-ku, Tokyo 100-8220 (JP)**

• **Kuroiwa, Hiroshi,**
**c/o Hitachi, Ltd., Int. Prop. Gp**
**Chiyoda-ku, Tokyo 100-8220 (JP)**
• **Ozaki, Naoyuki,**
**c/o Hitachi, Ltd., Int. Prop. Gp.**
**Chiyoda-ku, Tokyo 100-8220 (JP)**
• **Morita, Minoru,c/o Hitachi, Ltd., Int. Prop. Gp.**
**Chiyoda-ku, Tokyo 100-8220 (JP)**

(74) Representative: **Beetz & Partner**
**Steinsdorfstrasse 10**
**D-80538 München (DE)**

(54) **CLUTCH STRUCTURE OF MECHANICAL AUTOMATIC TRANSMISSION**

(57)    A clutch structure of a mechanical automatic transmission capable of suppressing the occurrence of vibration by preventing the pressing force of a clutch from being interfered with a thrust force generated by helical gears, wherein a pressing device pressing a disk in a direction opposite to the axial thrust force generated by the engagement of the first gear with the second gear is formed of a disk pressing device and a counterforce imparting pressing device pressing a clutch hub in a direction opposite to the thrust force.

FIG. 1

EP 1 746 300 A1

**Description**

Technical Field

The present invention relates to an automobile clutch unit, and in particular to a clutch unit for an automatic mechanical transmission which is an automatic type of a conventional manual transmission.

Background Art

An automobile transmission carry out speed reduction with the use of gears which are helical gears having tooth traces slanted to a rotating axis thereof in view of enhancement of quietness and strength thereof. However, since the helical gears cause such a disadvantageous property that an axial thrust force is produced as a reaction force through gear-meshing since the tooth traces are slanted. In the transmission, the thrust force stresses bearings and a transmission casing, resulting in possible occurrence of vibration and noise, and accordingly, the transmission itself or an automobile in which the transmission is installed, would lower their commercial values. Accordingly, it has been tried that a part bearing the thrust force is provided with a countermeasure against the thrust force, in order to restrain the thrust force. For example, it has been devised that a stopper utilizing a buffer is provided in a part which bears the thrust force, in order to restrain the generation of vibration by means of the buffer, as disclosed in JP-A-2001-99186.

Disclosure of Invention

However, a clutch unit in the transmission as stated above, has not yet decisively settled the above-mentioned problems, that is, bearings, a transmission casing and the like are still subjected to stress although an abrupt exciting force caused by the thrust force is dampened. In particular, a clutch for an automatic transmission is used in a wide range from a low load and low speed to a high load and high speed, and accordingly, the value of the thrust force and, as well, the frequency of vibration vary over a wide range, resulting in possible occurrence of vibration and noise which cannot be constrained by the provision of the buffer. Further, should vibration which possibly occurs change a torque transmitted through the clutch, variation in drive torque of an automobile would be finally caused, resulting in a risk of deterioration of its drive comfortability.

An object of the present invention is to provide a clutch mechanism capable of restraining a thrust force which causes vibration, for preventing occurrence of vibration and noise, and as well, preventing variation in drive torque of an automobile, in order to obtain a transmission which is calm and which can reduce vibration, and a comfortable automobile.

To the end, according to the present invention, there is provided a clutch unit comprising a pressing means for applying a pressing force required to produce a friction force with which the clutch unit can transmit a torque, a torque input shaft, a torque output shaft arranged being concentric or parallel with the torque input shaft, at least one first friction disc arranged on the input shaft or the output shaft, being concentric therewith, and constrained in a direction of rotation, at lease one second friction disc arranged being concentric with the first friction disc, a guide for holding the second disk which is therefore constrained in the direction of rotation, a first gear rotatably held to one of the input shaft and the output shaft, to which the first friction disc, the second friction disc and the guide are held, for constraining the guide in the direction of rotation, and producing a thrust force, and a second gear held to the other one of the shafts so as to be constrained in the direction of rotation, and meshed with the first gear, wherein there is provided a pressing means for effecting a pressing action when the clutch transmits a torque against the thrust force.

Further, there is provided, as a possible case, a shaft pressing means for axially pressing the shaft to which the clutch is fitted.

Specifically, according to the present invention, there is provided a clutch unit comprising a torque input shaft, a torque output shaft arranged being parallel or concentric with the torque output shaft, a clutch hub arranged being parallel or concentric with one of the torque input shaft and the torque outputs shaft, and being constrained in a direction of rotation, a first friction disc arranged on the clutch hub, being constrained in the direction of rotation, a second friction disc arranged being concentric with the first friction disc, a holding member for holding the second friction disc so as to constrain the same in the direction of rotation, a first gear rotatably held to one of the input shaft and the output shaft to which the clutch hub is provided, a second gear held to other one of the shafts, being constrained in the direction of rotation, and meshed with the first gear, a clutch pressing means for taking action between the first friction disc and the second friction disc so as to produce a friction force between the first friction disc and the second friction disc, a member (including the clutch hub itself) for bearing an axial thrust force produced through meshing between the first gear and the second gear, and a pressing means (including the clutch pressing means itself), for setting a pressing force to a value which is larger or smaller than the thrust force, always in a condition in which a torque is transmitted from the first friction disc to the second friction disc, and for applying the thus set pressing force to the member for bearing the thrust force in a direction opposite to the thrust force.

In this case, the pressing means consists of the clutch pressing means alone.

Further, the pressing means is composed of the clutch pressing means and a counterforce imparting pressing means for imparting a pressing force to the thrust force bearing member.

Further, the counterforce imparting pressing means may be composed of a spring, a hydraulic unit, an electric motor or an electromagnetic solenoid unit which is applied thereto with a pressing force by the pressing means and which is interposed between a pressure plate retainer for slidably holding a pressure plate received by the clutch hub, and a casing,.

Thus, according to the present invention, vibration, noise and variation in transmission torque which are caused by a thrust force effected in a helical gear used in a transmission can be restrained, thereby it is possible to provide a transmission which is calm and which causes less vibration, and to provide a comfortable automobile.

Further, in a specific form of the present invention, there is provided a clutch unit comprising a torque input shaft, a torque output shaft arranged being parallel or concentric with the input shaft, a clutch hub arranged on the input shaft, being concentric therewith, and constrained in a direction of rotation, a first friction disc arranged on the clutch hub, being constrained in the direction of rotation, a second friction disc arranged being concentric with the first friction disc, a holding member for holding the second disc so as to constrain the same in the direction of rotation, a first gear rotatably held on the input shaft, a second gear held on the output shaft, being constrained in the direction of rotation and meshed with the first gear, a disc pressing means for pressing the first friction disc against the second friction disc so as to produce a friction force between the first friction disc and the second friction disc, and a restoring means for restoring the first friction disc from the second friction disc, wherein a pressing means for pressing in a direction opposite to an axial thrust force effected through meshing between the first gear and the second gear is composed of the disc pressing means and a counterforce imparting pressing means for pressing the clutch hub in a direction in opposite to the thrust force.

Further, the counterforce imparting pressing means is composed of a spring, a hydraulic unit, an electric motor or an electromagnetic solenoid unit which is applied thereto with a pressing force by the pressing means and which is provided between a pressure plate retainer for slidably holding a pressure plate received by the clutch hub, and a casing,.

Further, in the pressing means, the pressing force is always set as a whole so as to be larger or smaller than the thrust force when the pressing means is in a condition that a torque is transmitted from the first friction disc to the second friction disc.

Brief Description of the Drawings:

Fig. 1 is a sectional view illustrating a clutch portion in an embodiment of a transmission incorporating a clutch unit according to the present invention;

Fig. 2 is a view illustrating an inclination of tooth traces of a helical gear;

Fig. 3 is a schematic view for explaining generation of a thrust force caused by meshing between helical gears;

Fig. 4 is a view which shows a relationship between a clutch pressing force and a thrust force caused by the gears, according to the present invention;

Fig. 5 is a view which shows a relationship between a clutch pressing force and a thrust force caused by gears in an conventional example;

Fig. 6 is a sectional view illustrating a clutch portion in another example of a transmission incorporating a clutch unit according to the present invention, and

Fig. 7 is a sectional view illustrating a clutch portion in a further another embodiment of a transmission having a clutch unit according to the present invention.

[Embodiment 1]

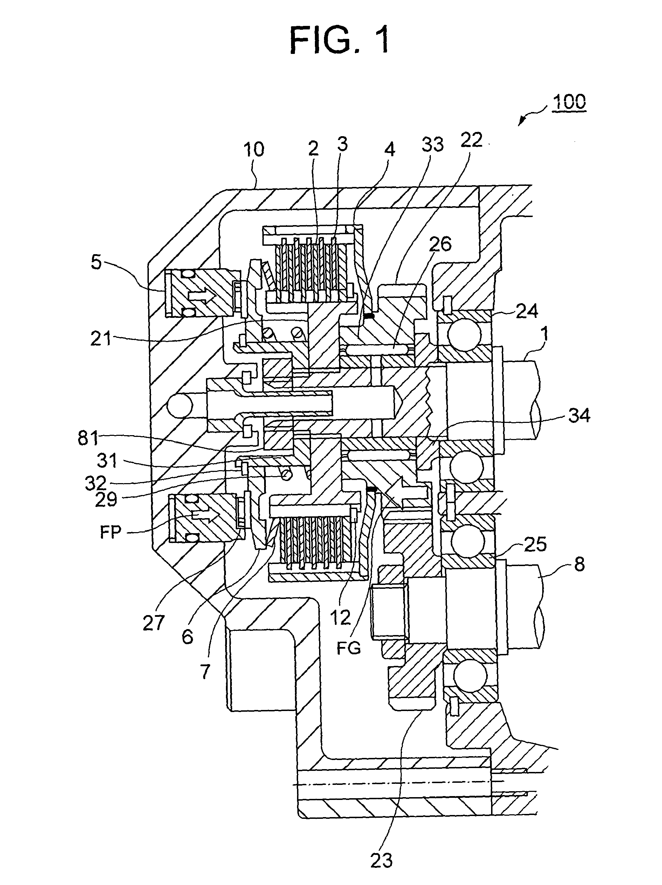

Explanation will be hereinbelow made of an embodiment 1 of the present invention with reference to Figs. 1 to 5.

Referring to Fig. 1 which is a sectional view illustrating the embodiment 1 of the present invention where a clutch unit 100 is applied in an automobile transmission, there is shown a casing 10. An input shaft 1 is fixed thereto with a clutch hub 21 by fastening a fixing nut 81. Splines are formed in the outer diametrical part of the clutch hub 21, and accordingly, first friction discs 2 are provided on the clutch hub 21, being constrained in a direction of rotation by the splines. In this embodiment, the clutch unit 100 is of a multi-disc type, that is, the number of the first friction discs 2 incorporated in the clutch unit is 6. Second friction discs 3 are arranged in the clutch hub 21, alternate with the first friction discs 2. The number of the second friction discs 3 provided in the clutch unit is five in this embodiment. External splines which are formed at the outer periphery of the second friction discs 3, are meshed with internal splines of a clutch drum 4, and accordingly, the second friction discs 3 are constrained in the direction of rotation by the clutch drum 4. In this embodiment, the friction discs are all incorporated within the transmission, and are submerged in lubrication oil. Thus, the clutch unit is classified as the so-called wet-type clutch. A power transmission gear 22 which is provided at one end part of the clutch drum 4, is meshed with a driven power transmission gear 23 of an output shaft 8. Although the output shaft 8 is arranged in parallel with the input shaft 1 in this embodiment, it may be arranged concentric therewith. The rotation of the clutch drum 4 is transmitted to the output shaft 8 through the intermediary of the drive power transmission gear 23. The clutch drum 4 which is supported to the input shaft 1 by a needle bearing 26, is free from the input shaft 1 in the direction of rotation. A hydraulic piston (a hydraulic piston mechanism) 5 is arranged for applying a pressing force to the first friction disc 2 and the second friction disc 3, and is fed therein with a hydraulic pressure controlled by a higher rank controller which is not shown. The motion of the hydraulic pressure is transmitted to the clutch side through the intermediary of an operation bearing 27. The clutch unit is rotated together with the input shaft 1 but the hydraulic piston 5 which is mounted to a transmission casing 5 cannot be rotated, and accordingly, the operation bearing 27 is provided for reducing a contact resistance. The linear motion of the operation bearing 27 is transmitted through a pressure plate 6 and a Belleville spring 7 as a pressing force applied to a clutch pack composed of the first friction discs 2 and the second friction discs 3. The pressure plate 6 is provided so as to be axially slidable on a pressure plate holding member 31 provided on the input shaft 1, and is adapted to be stopped at a stop position determined by a ring 32. A return spring 29 is interposed between the clutch hub 21 and the pressure plate 6. The axial motion of the clutch pack is restrained by a C-ring 12, and accordingly, the clutch pack is interposed between the pressure plate 6 and the C-ring 12. The clutch is incorporated therein with the return spring 29 serving as a restoring means for generating a force for pushing back the pressure plate 6 toward the hydraulic piston 5. When the hydraulic pressure fed into the hydraulic piston 5 is lowered, the hydraulic piston 5 is restored into its original position by the restoring force of the return spring, and accordingly, the pressing force applied to the clutch pack is released.

It is noted that the power transmission gear 22 and the driven power transmission 23 are helical gears having tooth traces which are helical, and accordingly, a thrust forth FG is generated as shown in Fig. 1 when the power is transmitted by the clutch unit from the input shaft to the output shaft.

A front end protrusion 33 of the power transmission gear 22 makes contact with the clutch hub 21, and accordingly, the thrust force FG is transmitted to the clutch hub 21. In this example, although the clutch hub 21 is used as a thrust bearing member so as to have a simplified structure, another member may be added so as to be used as the thrust bearing member. Explanation will be hereinbelow made of such a case that the thrust force FG is born by the clutch hub 21. There is provided the other side gear retainer 34 for the power transmission gear 22.

It is noted here that although the hydraulic pressure is used for pressing the clutch unit, there may be used, instead thereof, any other mechanism which utilizes an electric motor or an electromagnetic solenoid unit may be also used if it can produce a pressing force. Although the clutch unit is of such a normal open type that the clutch unit can be released in a condition in which no operating force is externally applied, there may be used a normal closed type one in which the clutch unit can be fastened in a condition in which no operating force is externally applied.

It is noted that although explanation has been made of the clutch unit provided to the input shaft 1, that is, the clutch hub 21 is provided to the input shaft 1 in the above-mentioned embodiment, the same technical effects and advantages can be achieved even though it is provided on the output shaft 8.

Explanation will be hereinbelow made of the operation of the clutch in this embodiment having the above-mentioned configuration.

At first, in a condition in which no hydraulic fluid is fed into the hydraulic piston 5, although the first friction clutch 2 and the second friction clutch 3 transmit therebetween a slight power due to slide motion therebetween, but its slight power is negligible. Thus, no power transmission is caused among the clutch hub 21 fixed to the first friction discs 2 in the direction of rotation, the input shaft 1 and the clutch drum 4 fixed to the second friction discs 3 in the direction of rotation, and accordingly, the input shaft 1 and the clutch drum 4 are rotated, free from each other. The power transmission gear 22 formed on the clutch drum and the driven power transmission gear 23 of the output shaft 8 are meshed with each other while the driven power transmission gear 23 is constrained by the output shaft 28, and accordingly, no transmission power is present between the input shaft 1 and the output shaft 8.

In the case of the activation of the clutch unit for transmission of a power from the input shaft 1 to the output shaft 8, hydraulic fluid whose pressure is controlled by the upper rank controller which is not shown, is fed in to the hydraulic piston 5 which therefore produces therefrom a clutch pressing force FP. The clutch pressing force produced by the hydraulic piston 5 is transmitted to the pressure plate 6 by way of the operation bearing 27, and is then exerted to the clutch pack composed of the first friction discs 2 and the second friction discs 3 through the intermediary of the Belleville spring 7. Axial displacement of the clutch pack is limited by the C-ring 12 on the clutch hub 21, and accordingly, the clutch pack is interposed between the pressure plate 6 and the C-ring 12 so that the first friction discs 2 and the second friction discs 3 are pressed to each other so as to produce a transmission torque through friction. Thus, a power transmitted to the input shaft 1 is transmitted from the input shaft 1, successively to the clutch hub, the first friction discs 2, the second friction discs 3, the clutch drum 4, the power transmission gear 21, the driven power transmission gear 23 and the output shaft 8, in the mentioned order, that is, the power is transmitted from the input shaft 1 to the output shaft 5.

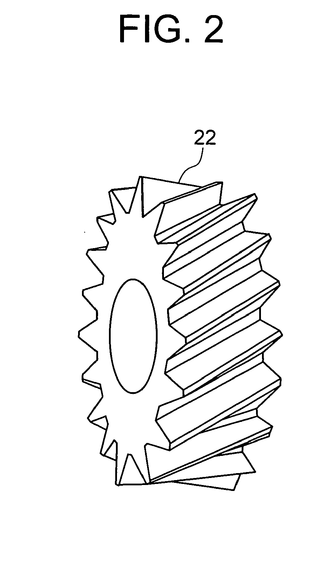

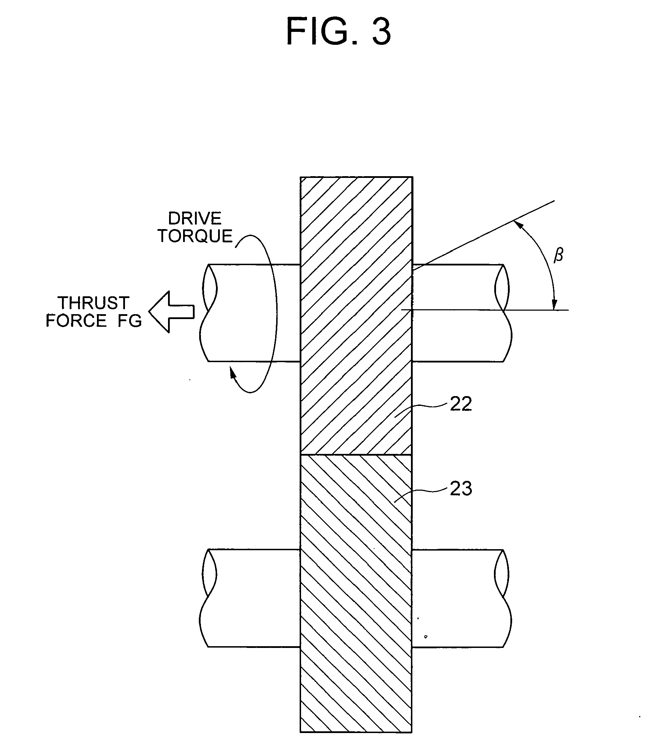

It is noted that the power transmission gear 22 is a helical gear having helical tooth traces, as shown in Fig. 2. The driven transmission gear 23 has also a similar configuration. Since the tooth traces of the helical gear are slanted, its contact ratio smoothly varies, and accordingly, the helical gear is calm and has a high strength. However, it exhibits such a disadvantage that a thrust force is produced. It is noted here that the thrust force FG is produced as shown in Fig. 3 in the case of transmission of a torque from the power transmission gear 22 to the driven power transmission gear 23, and is approximately calculated by the following formula:

$$FG = (T/r)\tan\beta \qquad\qquad \text{Formula (1)}$$

where $\beta$ is a slant of the tooth trace, T is a transmission torque, and r is a pitch diameter of the gear..

Further, the relationship between the clutch pressing force FP and the transmission torque is exhibited by the following formula:

$$T = \mu Rz(FP - FS) \qquad\qquad \text{Formula (2)}$$

where $\mu$ is a friction coefficient, R is an effective radius of the clutch unit, z is a number of friction surfaces in the clutch unit, and FS is a reaction force of the return spring.

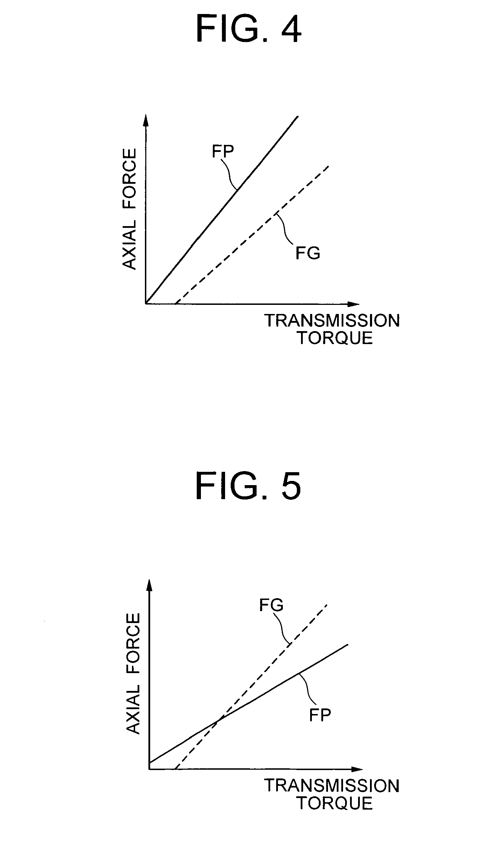

Further, in the present invention, the direction of the thrust force FG is opposed to that of the clutch pressing force FP, as shown in Fig. 1. Further, there has been constructed such a configuration that the clutch pressing force FP is always greater that the thrust force FG within a range in which the clutch unit transmits a torque, as shown in Fig. 4.

That is, a clutch pressing force required for a certain transmission torque is determined by the formula (2), and further, a thrust force produced by a certain transmission force is determined by Formula (1), independent from the former. It is noted here that the clutch pressing force FP may be set to be always greater than the thrust force FG by adjusting the parameters in Formula (1) or (2). For example, if the return spring reaction force FS is adjusted to a larger value, the clutch pressing force required for producing a certain thrust force may be increased. In such a way, the clutch pressing force FP may be set to be always greater than the thrust force FG. With the adjustment as stated above, the input shaft 1 may be stably positioned in a direction in which it is pressed by the clutch pressing force FP over the entire operation range of the clutch unit, and accordingly, no vibration or the like occurs. On the contrary, there may be also provided such a configuration that the clutch pressing force FP is always smaller than the thrust force FG, and the input shaft 1 is stably positioned in the direction in which it is pressed by the thrust force FG over the entire operation range of the clutch unit. That is, as to the values FP, FG which may be obtained by the formulae (1) and (2), the relationship given by the following formula may be satisfied over the entire operation range of the clutch unit:

$$FG < FP \qquad\qquad \text{Formula (3)}$$

Alternatively, the relationship given by the following formula may be satisfied over the entire operation range of the clutch unit:

$$FG > FP \qquad\qquad \text{Formula (4)}$$

In such a case that the value of the pressing force FP and that of the thrust force FG are inverted as shown in Fig. 5, the input shaft is moved in a direction in which the pressing force FP is exerted, in a range in which the transmission torque is smaller than a cross point, but in such a case that the transmission torque exceeds the cross point, the thrust force FG becomes greater, and accordingly, the input shaft is moved in a direction in which the thrust force FG is exerted, that is, in a direction reverse to the direction in which the pressing force FP is exerted. As stated above, since the general direction of a force exerted to the input shaft is reversed at the cross point, it becomes oscillatory around the cross point, resulting in occurrence of vibration and noise from the transmission, and deterioration of the comfortability of an automobile on which the transmission is installed.

With the configuration as stated above, there is provided a clutch unit in which the first gear 22 is formed thereto with a protrusion, and an axial force caused through meshing between the first gear 22 and the second gear 23 is born by the clutch hub 21 incorporating a pressing means for pressing the clutch hub 21 in a direction in which the thrust force is opposed.

As stated above, in this embodiment, vibration and noise caused by the thrust force of the helical gear, and as well, the comfortability of an automobile installed thereon with a transmission utilizing helical gears may be improved.

[Embodiment 2]

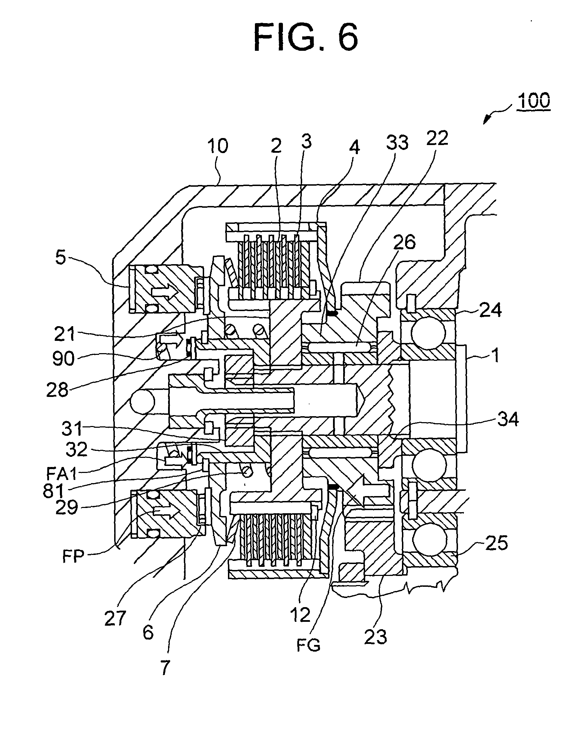

Explanation will be made of an embodiment 2 of the present invention with reference to Fig. 6.

Fig. 6 is a sectional view illustrating the embodiment 2 in which a clutch unit according to the present invention is used in a transmission for an automobile. The configuration of this embodiment is similar to that of the embodiment 1 shown in Fig. 1, as to the structure of the clutch unit, the arrangement of the shaft and the pressing means, except that another pressing means is added in this embodiment. The other pressing means in this case is a coil spring 90, and accordingly, the shaft pressing means is composed of the coil spring 90 and the thrust bearing 28, and the coil spring 90 is incorporated, being applied thereto with an initial displacement so as to always produce a force for pressing the input shaft 1. In this case, the coil spring 90 will be referred to, as an example, a counter force imparting pressing means opposed to the other pressing means.

Explanation will be hereinbelow made of the operation of the clutch unit in this embodiment having the above-mentioned configuration. In a condition in which no hydraulic fluid is fed into the hydraulic piston 5, although a slight power is transmitted through the clutch unit since the first friction discs 1 and the second friction discs 3 are slide on each other, this transmission power is negligible. Accordingly, no power is transmitted among the clutch hub 21 which is fixed to the first friction discs 2 in the direction of rotation, the input shaft 1 and the clutch drum 4 fixed to the second friction discs 3 in the direction of rotation, and accordingly, the input shaft 1 and the clutch drum 4 are rotated, free from each other. Since the power transmission gear 22 formed on the clutch drum 4 is meshed with the driven power transmission gear 23 of the output shaft 8, and since the rotation of the driven power transmission gear 23 is constrained by the output shaft 8, no power transmission is present between the input shaft 1 and the output shaft 8.

When the clutch unit is to be operated so as to transmit a power from the input shaft 1 to the output shaft 8, hydraulic fluid is fed into the hydraulic piston with a pressure controlled by the upper rank controller which is not shown, and accordingly, the clutch pressing force FP is produced by the hydraulic piston. The pressing force produced by the hydraulic piston is transmitted to the pressure plate 6 by way of the operation bearing 27, and is then exerted to the clutch pack composed of the first friction discs 1 and the second friction discs 3 by way of the Belleville spring 7. It is noted here that the axial displacement of the clutch pack is limited by the C-ring 12, and accordingly, the clutch pack is interposed between the clutch pack and the C-ring 12 so as to press the first friction discs 2 and the second friction discs 3 to each other so as to produce a transmission torque due to the friction thereof. Thus, the power transmitted to the input shaft is transmitted from the input shaft 1, successively to the clutch hub 21, the first friction discs 2, the second friction discs 3, the clutch drum 4, the power transmission gear 22, the driven power transmission gear 23 and the output shaft 8 in the mentioned order, that is, the power may be transmitted from the input shaft 1 to the output shaft 8.

It is noted here that the power transmission gear 22 is a helical gear having helical tooth traces. The tooth traces of the helical gear are slanted, and accordingly, its contact ratio smoothly varies so that the helical gear is calm and to have a high strength. However, this helical gear 22 exhibits such a disadvantage that a thrust force is produced. In this embodiment, the thrust force FG produced by the gears is arranged so as to be opposed to the clutch pressing force FP, and further, a shaft pressing force FA1 is further effected by the shaft pressing means. Thus, the sum of the clutch pressing force FP and the shaft pressing force FA1 is set to be always greater than the thrust force FG in a range in which the clutch surely transmits a torque. That is, the input shaft is stably positioned in a direction in which it is pressed by the clutch pressing force FP, and accordingly, no vibration or the like occurs.

As stated above, in this embodiment, vibration and noise caused by the thrust force of the helical gears and the comfortability of an automobile installed therein with a transmission utilizing the helical gears, can be improved.

[Embodiment 3]

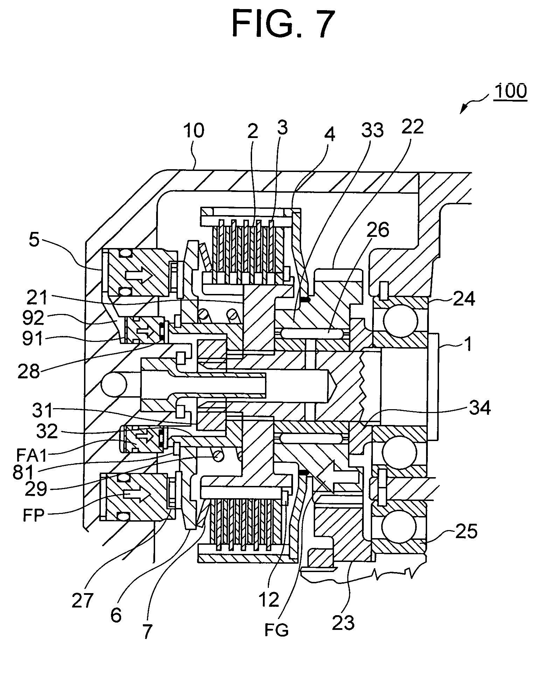

Explanation will be made of an embodiment 3 with reference to Fig. 7.

Fig. 7 is a section view illustrating the embodiment 3 in which a clutch unit according to the present invention is used in a transmission for an automobile. The configuration of this embodiment is similar to that of the embodiment 1 shown in Fig. 1 as to the structure of the clutch unit, the configuration of the shafts, the pressing means and the like, and is the same as that of the embodiment 2 shown in Fig. 6, except that another shaft pressing means is present. The shaft pressing means is composed of an axial force hydraulic piston 91 and a thrust bearing 28, the axial force hydraulic piston 91 having a cylinder serving as a hydraulic fluid chamber which is communicated with the hydraulic fluid chamber of the hydraulic piston 5 for producing the clutch pressing force by way of a communication passage 92. In this case, the other shaft pressing means is the axial force hydraulic piston 91, and accordingly, the axial force hydraulic piston 91 is an example of a counterforce imparting pressing means. That is, when a hydraulic pressure is produced from the upper rank controller in order to actuate the clutch unit, the hydraulic fluid is fed into the hydraulic piston 5, and accordingly, a part of the hydraulic fluid flows through the communication passage 92 and into the axial force hydraulic piston 91 which therefore produces a force for pressing the input shaft.

Then, explanation will be hereinblow made of the operation of the clutch unit according to the present invention.

At first, in a condition in which no hydraulic fluid is fed into the hydraulic piston 5, although slight power is transmitted between the first friction discs 2 and the second friction discs 3 due to slide motion therebetween, this slight power is negligible. Thus, no power is transmitted among the clutch hub 21 fixed to the first friction discs 2 in the direction of rotation, the input shaft 1 and the clutch drum 4 fixed to the second friction discs 3 in the direction of rotation, and accordingly, the input shaft 1 and the output shaft 8 can be rotated, free from each other. The power transmission gear 22 formed on the clutch drum is meshed with the driven power transmission gear 23 of the output shaft 8 while the power transmission gear 23 is rotationally constrained by the output shaft 8, and accordingly, no power is transmitted between the input shaft 1 and the output shaft 8.

In the case of transmission of a power from the input shaft 1 to the output shaft 8 by activation of the clutch unit, hydraulic fluid whose pressure is controlled by the upper rank controller which is not shown, is fed into the hydraulic piston 5 which therefore produces a clutch pressing force FP. The clutch pressing force FP delivered from the hydraulic piston 5 is transmitted through the operation bearing 27 and to the pressure plate 6, and accordingly, a force for pressing the clutch pack composed of the first friction discs 2 and the second friction discs 3 is effected by way of the Belleville spring 7. Since the axial displacement of the clutch pack is limited on the clutch hub 21 by the C-ring 12, the clutch pack is interposed between the pressure plate 6 and the C-ring 12, and accordingly, the first friction discs 2 and the second friction discs 3 are pressed to each other so as to produce a transmission torque due the friction thereof. Thus, the power transmitted to the input shaft 1 is transmitted from the input shaft 2, successively to the clutch hub 21, the first friction discs 2, the second friction discs 3, the clutch drum 4, the power transmission gear 22, the driven power transmission gear 23 and the output shaft 28 in the mentioned order, that is, the power can be transmitted from the input shaft 1 to the output shaft 8.

At this stage, a part of the hydraulic fluid to be fed into the hydraulic piston 5 flows through the communication passage 92 and into the axial force hydraulic piston 91 which therefore produces a force for pressing the input shaft 1.

It is noted here that the power transmission gear 22 is a helical gear having helical tooth traces. Since the tooth traces of the helical gear are slanted, the contact ratio thereof smoothly varies. Thus, the helical gear is calm and has a high strength. However, it exhibits such a disadvantage that a thrust force is produced. In this embodiment, there is constructed such a configuration that the thrust force FG produced through the gears and the clutch pressing force FP are opposed to each other, and the shaft pressing force FA1 produced by the axial force hydraulic piston 91 is further exerted. Thus, the sum of the clutch pressing force FP and the shaft pressing force FA1 is set to be always greater than the thrust force FG over a range in which the clutch unit surely transmits a torque. That is, the input shaft is stably positioned in a direction in which it is pressed by the clutch pressing force FP, and accordingly, no vibration and the like are produced.

As stated above, in this embodiment, vibration and noise caused by the thrust force of the helical gear, and the comfortability of an automobile installed thereon with a transmission utilizing a helical gear may be improved. Further, since no shaft pressing force is effected during a rest of the clutch unit, the friction loss of the transmission can be restrained to a small value, thereby it is possible to provide a transmission with a high degree of efficiency.


**Claims**

1.   A clutch unit comprising a torque input shaft, a torque output shaft arranged being parallel or concentric with the input shaft, a cultch hub arranged on the input shaft or the output shaft, being copncentric therewith and constrained in a direction of rotation, a first friction disc arranged on the clutch hub, being constrained in the direction of rotation, a second friction disc arranged being concentric with the first friction disc, a holding member for holding the second friction disc which is therefore constrained in the direction of rotation, a first gear rotatably held on one of the input shaft and the output shaft, to which the clutch hub is provided, a second gear held on the other one of the shafts, being constrained in the direction of rotation and meshed with the first gear, and a clutch pressing means taking action between the first friction disc and the second friction disc so as to produce a friction force between the first friction disc and the second friction disc,

characterized in that,

a member (including the clutch hub itself) for bearing an axial thrust force produced through meshing between the first gear and the second gear is provided, and a pressing means (including the clutch pressing means itself) for setting a pressing force so as to be always greater or smaller than the thrust force when a torque is transmitted from the first friction disc to the second friction disc, and applying the pressing force to the member in a direction opposite to the thrust force.

2.  A clutch unit as set forth in claim 1, **characterized in that** the pressing means is composed of the clutch pressing means alone.

3.  A clutch unit as set forth in claim 1, **characterized in that** the pressing means is composed of the clutch pressing means and a counterforce imparting pressing means for imparting a pressing force to the thrust force bearing member.

4.  A clutch unit as set forth in claim 3, **characterized in that** the counterforce imparting pressing means is composed of a spring, a hydraulic unit, an electric motor or an electromagnetic solenoid unit which is applied thereto with a pressing force by the pressing means, and which is provided between a pressure plate retainer for slidably holding a pressure plate and received by the clutch hub, and a casing.

5.  A clutch unit comprising a torque input shaft, an torque output shaft arranged being parallel or concentric with the input shaft, a clutch hub arranged on the input shaft, being concentric with the input shaft and constrained in a direction of rotation, a first friction disc arranged on the clutch hub, being constrained in the direction of rotation, a second friction disc arranged being concentric with the first friction disc, a holding means for holding the second friction disc which is therefore constrained in the direction of rotation, a first gear rotatably held on the input shaft, a second gear constrained in the direction of rotation on the output shaft and meshed with the first gear, a disc pressing means for pressing the first friction disc to the second friction disc so as to produce a friction force between the first friction disc and the second friction disc, and a restoring means for restoring the first friction disc from the second friction disc, **characterized in that**
the first gear is provided thereto with a protrusion so as to cause the clutch hub to bear an axial thrust force produced through meshing between the first gear and the second gear, and the clutch hub is provided with a pressing means for pressing in a direction opposite to the thrust force.

6.  A clutch unit comprising a torque input shaft, a torque output shaft arranged being parallel or concentric with the input shaft, a clutch hub arranged on the input shaft, being concentric with the input shaft and constrained in the direction of rotation, a first friction disc arranged on the clutch hub, being constrained in the direction of rotation, a second friction disc arranged being concentric with the first friction disc, a holding means for holding the second disc which is therefore constrained in the direction of rotation, a first gear rotatably held on the input shaft, a second gear arranged on the output shaft, being constrained in the direction of rotation and meshed with the first gear, a disc pressing means for pressing the first friction disc to the second friction disc so as to produce a friction force between the first fiction disc and the second friction disc, and a restoring means for restoring the first friction disc from the second friction disc, **characterized in that**
a pressing means for pressing in a direction opposite to an axial thrust force produced through meshing between the fist gear and the second gear is composed of the disc pressing means and a counterforce imparting pressing means for pressing the clutch hub in a direction opposite to the thrust force.

7.  A clutch unit as set forth in claim 6, **characterized in that** the counterforce imparting pressing means is composed of a spring, a hydraulic unit, and an electric motor or an electromagnetic solenoid unit which is applied thereto with a pressing force and which is provided between the a pressure plate retainer for slidably holding a pressure plate received by the clutch hub, and a clutch body.

8.  A clutch unit as set forth in claim 7, **characterized in that** the disc pressing means is a hydraulic piston mechanism, and the counterforce imparting pressing means is a hydraulic piston mechanism, both hydraulic piston mechanisms having hydraulic fluid chambers which are communicated with each other by way of a communication passage.

# FIG. 1

# FIG. 2

# FIG. 3

DRIVE
TORQUE

THRUST
FORCE  FG

$\beta$

22

23

# FIG. 4

# FIG. 5

# FIG. 6

# FIG. 7

## INTERNATIONAL SEARCH REPORT

International application No.

PCT/JP2004/006355

A. CLASSIFICATION OF SUBJECT MATTER
Int.Cl⁷ F16D25/08, F16D13/70

According to International Patent Classification (IPC) or to both national classification and IPC

B. FIELDS SEARCHED

Minimum documentation searched (classification system followed by classification symbols)
Int.Cl⁷ F16D25/08, F16D25/0638, F16D13/70

Documentation searched other than minimum documentation to the extent that such documents are included in the fields searched
Jitsuyo Shinan Koho          1922-1996   Jitsuyo Shinan Toroku Koho   1996-2004
Kokai Jitsuyo Shinan Koho    1971-2004   Toroku Jitsuyo Shinan Koho   1994-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-254349 A (Hitachi, Ltd.),<br>10 September, 2003 (10.09.03),<br>Claim 1; Par. Nos. [0007] to [0024]; Fig. 1<br>& US 2003/0166433 A1    & DE 10254213 A | 1-8 |
| A | JP 2003-166605 A (Aisin AW Co., Ltd.),<br>13 June, 2003 (13.06.03),<br>Par. Nos. [0055] to [0065]; Figs. 1 to 4<br>& US 2003/0104895 A1    & DE 10255940 A | 1-8 |
| A | JP 2001-099186 A (Honda Motor Co., Ltd.),<br>10 April, 2001 (10.04.01),<br>Claim 1; Par. Nos. [0009] to [0020]; Figs. 1 to 4<br>(Family: none) | 1-8 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 August, 2004 (09.08.04) | 24 August, 2004 (24.08.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2004/006355 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-310759 A (Aisin AW Co., Ltd.), 02 December, 1997 (02.12.97), Claim 1; Par. No. [0028]; Fig. 4 & US 5908096 A & EP 0809042 A | 1-8 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001099186 A